# EUROPEAN PATENT SPECIFICATION

(11) **EP 3 510 271 B1**
(45) Date of publication and mention of the grant of the patent: **17.06.2020**
(21) Application number: 16778424.8
(22) Date of filing: 07.09.2016
(51) Int. Cl.: F02M 21/02, F02D 19/06, F02D 19/10, F02M 43/04

(54) **A FUEL SYSTEM FOR FEEDING GAS FUEL TO AN INTERNAL COMBUSTION PISTON ENGINE AND A METHOD OF OPERATING AN INTERNAL COMBUSTION PISTON ENGINE**
KRAFTSTOFFSYSTEM FÜR DIE SPEISUNG EINES HUBKOLBENMOTORS MIT GAS SOWIE VERFAHREN ZUM BETRIEB EINES HUBKOLBENMOTORS
CIRCUIT DE COMBUSTIBLE PERMETTANT D'ALIMENTER EN COMBUSTIBLE GAZEUX UN MOTEUR À PISTON À COMBUSTION INTERNE ET PROCÉDÉ D'ACTIONNEMENT D'UN MOTEUR À PISTON À COMBUSTION INTERNE

(43) Date of publication of application: 17.07.2019
(73) Proprietor: Wärtsilä Finland Oy, 65100 Vaasa (FI)
(72) Inventor: LAINE, Mikko, 65100 Vaasa (FI)
(74) Representative: Genip Oy
(86) International application number: PCT/FI2016/050621
(87) International publication number: WO 2018/046788

(56) References cited:
- EP-A1- 2 985 443
- JP-A- 2001 107 805
- JP-A- 2006 250 149
- US-A1- 2014 075 943
- US-A1- 2015 047 350

## Description

### Technical field

The present invention relates to fuel system for feeding gas fuel to an internal combustion piston engine the system comprising one or more fuel injectors configured to inject liquid gas fuel into the engine, a fuel inlet line extending from a fuel tank via a high pressure pump to the one or more injectors, and a fuel return line for handling a so called return fuel from the one or more injectors according to the preamble of claim 1.

Invention relates also a method of operating an internal combustion engine according to an independent method claim.

### Background art

Internal combustion piston engines are widely used making use of various liquid and gaseous fuels. The variety of fuels has an increasing tendency at least partly due to the diminishing resources of petroleum.

The fuel which is used in an internal combustion piston engine sets technical requirements to the fuel section in order to operate as desired. Following publications are cited as examples of different fuel sections in connection with an internal combustion engines.

WO2013127526 A1 discloses a power plant include an internal combustion engine configured to be operated with pyrolysis oil based fuels. The power plant may allow switching fuels while continuously operating internal combustion engine and provide for a stop and start-up procedure for operating the internal combustion engine with pyrolysis oil based fuels.

WO2008065238 A1 shows a marine vessel machinery, comprising a fuel feeding system for feeding fuel to the at least two combustion units, a separate first fuel tank for first fuel and a second fuel tank for second fuel. The fuel feeding system is provided with a fuel blending unit connected to the first and the second fuel tanks.

In US2014109866 A1 there is shown an internal combustion engine which includes one main combustion chamber for the combustion of a first combustion mixture, one pre-combustion chamber for each respective main combustion chamber for the combustion of a second combustion mixture, a first fuel gas mixer for providing the first combustion mixture, a second fuel gas mixer for providing the second combustion mixture, an air feed line and a synthesis gas feed line, a first mixture line connected to the first fuel gas mixer and the main combustion chamber, and a second mixture line connected to the second fuel gas mixer and the pre-combustion chamber. The first fuel gas mixer is connected to the synthesis gas feed line for the admixing of synthesis gas, and an open or closed loop control device is provided for open or closed loop controlling mixing ratios of fuel, air and synthesis gas in the first combustion mixture and/or second combustion mixture.

WO2004097196A1 discloses the use of a pressure regulator (a pressure decreasing device) in the fuel return line. In this case the fuel is given enough pressure increase inside the fuel tank by the high pressure pump to remain in the liquid form after passing by the injector.

US 2015/047350 A1 discloses an internal combustion piston engine operating on LPG provided with direct fuel injectors injecting liquid gaseous fuel and port fuel injectors injecting gaseous fuel under gas phase conditions. Direct fuel injectors are provided with a fuel return line.

US 2014/075943 A1 discloses a fuel system wherein the fuel return line comprises a separation unit configured to separate gaseous and liquid portions of the return fuel.

EP2985443 A1 discloses a fuel system for an internal combustion piston engine by means which it is possible to operate the engine successfully with low viscosity fuel, particularly a gas condensate fuels. The engine comprising a first fuel section and a second fuel section in which the second fuel section being arranged to inject the fuel into the combustion chambers for igniting the first fuel, and in which the fuel return line of the first fuel section extends from each of the injectors to the tank and the fuel return line comprises a pressure increasing means arranged to the fuel return line of the first fuel section between the injectors and the tank.

Due to many reasons, but particularly because constantly restricting emission requirements, the variety of potentially usable fuels in an internal combustion piston engine has recently increased. So far it has been a common practise that gaseous fuels have been combusted in piston engines in gaseous form even if they would be stored or delivered in liquefied form. This is suitable and convenient for certain gases, such as natural gas, pure propane or liquefied petroleum gas.

However, there is a need to develop a fuel system for and method of operating an internal combustion engine with certain hydrocarbons compounds which would possible be otherwise wasted.

An object of the invention is to provide a fuel system for and method of operating an internal combustion engine by means of which particularly liquid gas fuel may be efficiently combusted.

### Disclosure of the Invention

The objects of the invention can be met substantially as is disclosed in the independent claim and in the other claims describing more details of different embodiments of the invention.

According to an embodiment of the invention the fuel system for feeding liquid gas fuel to an internal combustion piston engine the system comprises one or more fuel injectors in the internal combustion engine configured to inject liquid gas fuel into the engine, a fuel inlet line extending from a fuel tank via a high pressure pump to the one or more injectors, and a fuel return line connected to the one or more injectors of the internal combustion engine for handling a so called return fuel from the one or more injectors. The fuel return line further comprises a separation unit configured to separate gaseous and liquid portions of the return fuel, a first return line section configured to return liquid portion of the return fuel from the separation unit for use in the high pressure pump, and a second return line section configured to direct the gaseous portion of the return fuel to an air intake system of the internal combustion engine to be fed to the engine with the charge air.

This way an efficient utilization of liquid gas fuel can be obtained.

According to an embodiment of the invention the first return line section is provided with a liquid fuel pump configured to increase the pressure of the liquid portion of the return fuel prior to feeding the fuel into the fuel tank. This way it is possible to control the pressure in the separation unit more independently and still make it possible to feed the liquid portion of the return fuel to the inlet side of the fuel feeding system.

According to an embodiment of the invention the second return line section is provided with a gas compressor configured to increase the pressure of the gaseous portion of the return fuel prior to directing the gaseous portion of the return fuel to the air intake system of the engine. This way the back pressure of the fuel return line can be more independently controlled and maintained a desired level such that the generation of the gaseous portion of the return fuel is at desired level.

According to an embodiment of the invention the second return line section is configured to control the admission of the gaseous portion of the return fuel into the air intake system when installed into an engine. Thus the second return line section is provided with an admission control valve configured to feed the gaseous portion of the return fuel to an air receiver of the air intake system.

The effects of the invention can be advantageously obtained by providing an internal combustion piston engine comprising a fuel system according to any one of the preceding claims arranged to inject fuel directly to combustion chambers of the engine.

Method of operating an internal combustion piston engine provided with a fuel system for feeding liquid gas fuel comprising steps:
- leading pressurized liquid gas fuel from a fuel tank via a fuel inlet line to one or more injectors of the internal combustion piston engine,
- returning part of the pressurized liquid gas fuel from the one or more injectors of the internal combustion piston engine as a return fuel to a separation unit in a fuel return line,
- separating gaseous and liquid portions of the return fuel from each other in the separation unit,
- returning the liquid portion of the return fuel for re-use as said pressurized liquid gas fuel,
- directing the gaseous portion of the return fuel to an air intake system of the internal combustion piston engine and feeding the gaseous portion of the return fuel to the engine with the charge air.

According to an embodiment of the invention the gaseous portion of the return fuel is temporarily stored in a gas storage and the pressure of the gas is monitored in the gas storage and when the pressure exceeds a predetermined pressure, gaseous portion of the return fuel is admitted to the air intake channel of the engine and the amount of injection of the liquid gaseous fuel injected to the engine is adjusted based on the admission rate of the gaseous portion of the return fuel.

According to an embodiment of the invention that flow rate of the return fuel is controlled by controlling the pressure in the return line.

According to an embodiment of the invention the amount of gaseous portion of the return fuel is controlled by controlling the pressure in the return line. Gaseous portion of the return fuel is formed by evaporation due to change of the conditions of the return fuel and the evaporation may be controlled by controlling the pressure in the return line.

According to an embodiment of the invention the engine is operated using operational modes comprising
- a first operational mode, in which the fuel combusted in the engine comprises a pilot fuel and the liquid gas fuel,
- a second operation mode in which the fuel combusted in the engine comprises a pilot fuel, the liquid gas fuel and the gaseous portion of the return fuel.

According to an embodiment of the invention in the first operational mode the amount of liquid gas fuel is 95-99,5% of the total fuel mass combusted.

According to an embodiment of the invention in the second operational mode the combined amount of liquid gas fuel is 95-99,5% of the total fuel mass combusted, with subtraction of the amount of the gaseous portion of the return fuel.

According to an embodiment of the invention the pressure of the liquid portion of the return fuel is increased whereafter the liquid portion of the return fuel is fed to a fuel tank.

According to an embodiment of the invention the pressure of the gaseous portion of the return fuel is increased to a pressure higher than the pressure of the charge air in the air intake system (12) prior to returning the gaseous portion of the return fuel into the air intake system.

Liquid gas fuel means in this connection fuel mixtures which have a portion of 1 - 100% of the fuel in gaseous form in atmospheric conditions, or normal conditions, but which can be put into liquid form by changing temperature and/or pressure of the fuel. Such fuels are for example liquefied natural gas LNG and liquefied petroleum gas LPG. Normal conditions may be defined to be NTP - Normal Temperature and Pressure conditions, which is defined at 20°C and 101.325 kPa.

Re-circulation of the gas is more environmental friendly than flaring it, and it is more economical to compress only the gaseous portion than compressing and cooling the whole return fuel flow back to liquid form.

As an example using liquid gas fuel at 100% engine load, the return fuel flow may be at the magnitude of 4 - 10% of the fuel quantity which is injected in the combustion chamber. At lower engine loads the return fuel flow can be even up to 25% of the injected fuel quantity. Therefore the invention provides an efficient manner of utilizing the return fuel flow in the engine.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in the appended claims.

### Brief Description of Drawings

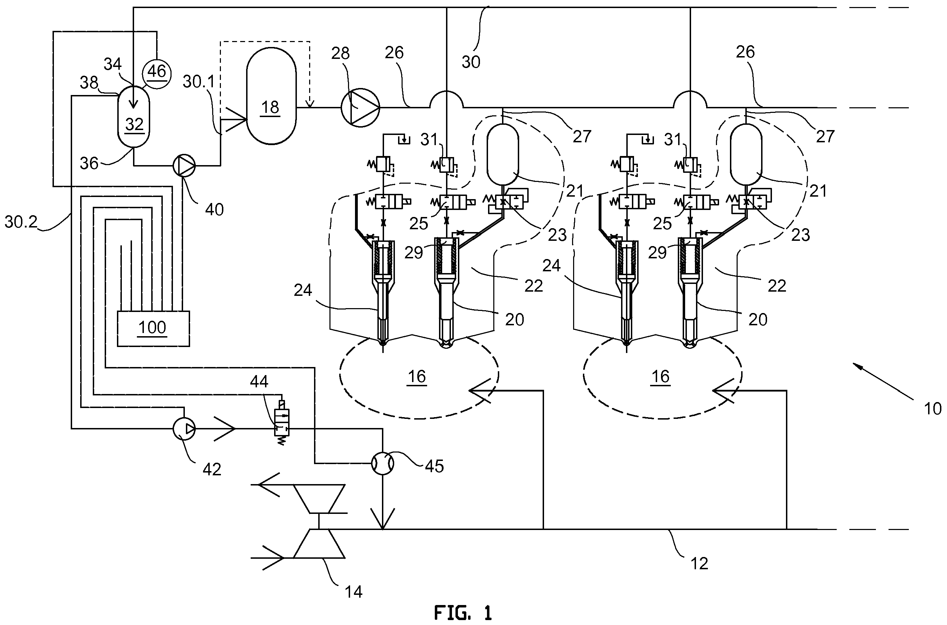

In the following, the invention will be described with reference to the accompanying exemplary, schematic drawing, in which
Figure 1 illustrates a fuel system according to an embodiment of the invention.

### Detailed Description of Drawings

Figure 1 depicts schematically a fuel system 10 for feeding liquid gas fuel to an internal combustion engine according to an embodiment of the invention. The engine itself is not shown but only some parts of the engine relevant for understanding the invention have been disclosed in the figure 1. Such parts are i.a. an air intake manifold 12, which is called here as an air receiver, a turbo charger 14 and combustion chambers 16 of the engine.

The fuel system is configured to feed liquid gas fuel to the engine. The fuel system comprises firstly a liquid gas fuel tank 18, which is for a sake of simplicity, referred to as a tank in the following. The fuel in the tank is stored in pressure and temperature circumstances where the gas has at least a liquid phase present, but typically both liquid and gaseous phases of liquid gas are present in the tank 18. The fuel system comprises one or more fuel injectors 20. In the figure 1 the fuel injector 20 is arranged to an injector body 22. The injector body is provided also with a second injector 24. The second injector belongs to a second common rail fuel system which is used for injecting a pilot fuel for igniting the liquid gas fuel in the combustion chambers 16 of the engine. Should the ignition be accomplished by other means, such as a spark ignition or plasma ignition the second common rail fuel system is not necessarily needed. The dotted line in connection with the injector body depict the parts of system which advantageously are integrated to the injector body i.e. the injector 20, the flow fuse 23, the accumulator 21 and the control valve 25 of the injector. Also the second injector is here integrated to the injector body 22.

The fuel system comprises a fuel inlet line 26 which is connected at its first end to the liquid gas fuel tank 18 such that it communicates with a lower part of the tank so as to receive the fuel in liquid form. There is a high pressure pump 28 arranged to the fuel inlet line 26 after i.e. downstream the fuel tank 18. The pump raises the fuel pressure to a level required by the injection. The fuel inlet line may be provided with a so called pressure accumulator common to all the fuel injectors 20 in the fuel system, which accumulator is not shown here for clarity reasons. The fuel inlet line 26 is provided with branch lines 27 by means of which the injectors 20 are connected to the fuel inlet line in parallel to each other.

The fuel injection system feed line comprises a dedicated accumulator 21 provided into each branch line 27. There is also a so called flow fuse 23 provided between the dedicated accumulator 21 and the injector 20 configure to allow only a predetermined amount of fuel to flow constantly through the flow fuse 23.

The operation of the injector is controlled by controlling force balance over the injector needle of the injector as is known as such in the art of the common rail fuel injection. The fuel system, particularly the fuel injector 20 comprises a control fuel chamber 29. The pressure of the fuel therein rules the position and movement of the needle and thus the operation of the fuel injection 20.

The fuel system comprises also a fuel return line 30. The control fuel chamber 29 is connected to the fuel return line 30. The fuel return line is arranged for handling a so called return fuel from the injectors 20. Due to the operation of the injector and/or clearances between the parts of the injector an amount of fuel flows through the injector to a lower pressure which is handled in a manner explained later. Such fuel is called as return fuel. Typically there is a substantially continuous flow of the return fuel. The return line is connected to each one of the injectors 20. The injector is provided with a control valve 25 by mean of which the control chamber is connected to the fuel return line which is at considerably lower pressure than the fuel in the fuel inlet line 26. By opening the control valve 25 the pressure in the control fuel chamber decreases rapidly and the force balance effecting on the valve needle is changed such that the valve opens. Respectively closing the control valve 25 causes the pressure in the control chamber 29 to increase and finally close the injector 20. The return line is in the embodiment of figure 1 also provided with a pressure regulating valve 31 arranged to the return line 30 downstream the control valve 25 so as to ensure that the return fuel is at adequate pressure in the control valve 25 for remaining in liquid form.

Additionally, the return line is provided with a separation unit 32 to which the injectors 20 are connected to so that the return fuel from the injectors flows in to the separation unit 32. The separation unit comprises a separator configured to separate gaseous portion and liquid portion of the return fuel from each other. The separation unit 32 is provided with an inlet 34 via which the return fuel is led into the separation unit 32. The gaseous portion and liquid portion are separated from each other. The liquid portion of the return fuel is removed from the separation unit 32 via a first outlet 36 while the gaseous portion of the return fuel is removed from the separation unit 32 via a second outlet 38 of the separation unit 32.

The first outlet 36 is connected to a first return line section 30.1. The first return line section 30.1 leads from the first outlet 36 of the separation unit 32 to the liquid gas fuel tank 18. The first return line section 30.1 is provided with a liquid fuel pump 40 between the first outlet and the liquid gas fuel tank 18. By means of the pump 40 the pressure of the liquid portion of the return fuel is increased so as to transfer the fuel into the tank 18 at appropriate pressure. This way the liquid portion of the return fuel is made available for use in the high pressure pump 28 in the fuel inlet line 26. As an optional alternative the first return line section 30.1 may be connected directly to the inlet side of the high pressure pump 28 which is depicted by a dotted line in the figure 1. The liquid fuel pump 40 is advantageously arranged to increase the pressure of the liquid gas fuel to a pressure of 1MPa - 8MPa pressure depending on the case.

The second outlet 38 is connected to a second return line section 30.2 of the fuel system 10. The second return line section 30.2 leads from the second outlet 38 of the separation unit 32 to the air intake system 12 of the engine. This way the second return line section 30.2 is configured to direct the gaseous portion of the return fuel to an air intake system 12 of the engine to be fed to the engine with the charge air. The second return line section 30.2 is provided with a gas compressor 42 which is configured to increase the pressure of the gaseous portion of the return fuel prior to directing the gaseous portion of the return fuel to the air intake system 12 of the engine. As is shown in the figure the second return line section 30.2 connects the separation unit 32 to an air receiver of the air intake system downstream the turbo charger 14, and advantageously upstream a charge air cooler (not shown) for cooling the compressed gaseous portion of the return fuel. Alternatively, the second return line section 30.2 may be connected to the air intake system before the turbocharger. It is also conceivable to introduce the gaseous portion of the return fuel to a dedicated air intake channel of each cylinder of the engine. The pressure in the air receiver is maintained at about 0,2 - 1 MPa. The compressor 42 is configured to increase the pressure of the gaseous portion of the return fuel to a pressure which is at least the pressure prevailing in the air intake system 12 or at the location where the gaseous portion of the return fuel in introduced.

The second return line section 30.2 also provided with an admission control valve 44 configured to control the admission of the gaseous portion of the return fuel in the air intake system 12.

According to an embodiment of the invention the pressure of the gaseous portion of the return fuel is maintained at a pressure higher than the pressure in the air intake system 12 in which case the compressor 42 need not be operated or it may even be omitted from the system.

By adjusting the back pressure of the return fuel, the share of the gaseous portion of the return fuel can be changed and adjusted so that the higher the back pressure is the smaller amount of gaseous portion of the return fuel is evaporated. Typically the pressure in the return line is 0 - 1 MPa. The back pressure can be adjusted for example by controlling the discharge of the gas from the separation unit 32 i.e. controlling the liquid fuel pump 40 and/or 42 the gas compressor and the admission control valve 44 in the second return line section 30.2.

Because the flow rate of the gaseous portion of the return fuel is often not constant but varies e.g. depending on engine load, it is advantageous to control the pressure of the gaseous portion of the return fuel and introduction of the gaseous portion of the return fuel into the air intake system 12. The separation unit 32, as well as the second return line section 30.2 may also operate as a gas storage where the gaseous portion of the return fuel may be temporarily stored. It is feasible to provide the system with separate gas storage if the case so requires and the separation unit may be provided with or constitute an integral gas storage.

The basic idea of the operation is in connection with feeding the gaseous portion of the return gas is that it is temporarily stored or collected until a correct predetermined pressure and/or quantity is reached.

The operation of the fuel system 10 comprises at least the following steps. During the operation the pressure and/or amount of the stored gaseous portion of the return fuel is continuously or intermittently measured or otherwise determined. In the figure 1 the separation unit 32 is provided with a pressure sensor 46 for measuring the pressure of the gaseous portion of the return fuel. Also the amount or flow rate of the gaseous portion of the return fuel which is admitted to the air intake system 12 is continuously or intermittently measured or otherwise determined. In the figure 1 the second section of the return line 30.2 is provided with a flow sensor 45 for measuring the flow rate of the gaseous portion of the return fuel into the air intake system 12. Gas quantity in the air intake system 12 is limited to be lower than its self-ignition level to avoid combustion outside cylinder or to avoid too early combustion inside cylinder.

The fuel system or the engine according to the invention is provided with a control unit 100 provided with a data processing unit which comprises executable instructions, such as a computer program, for controlling the share and/or amounts of the liquid gas fuel and the gaseous portion of the return fuel and their portions in each combustion cycle. The control unit 100 is arranged in data transmission communication with at least the gas compressor 42, the liquid fuel pump 40, the pressure sensor 46, the admission control valve 44 and the flow sensor 45.

The control unit 100 is configured by means of the executable instruction to control the operation of the fuel system 10 to
- continuously or intermittently define a value for a pre-set control variable which is the pressure and/or amount of stored gaseous portion of the return fuel,
- comparing said value of the pre-set control variable to a set value of the control variable and
- in case the actual value of the control variable is greater than the set vale of the control variable,
   ∘ admit the stored gaseous portion of the return fuel to the air intake system 12
   ∘ continuously or intermittently measure or otherwise determine the amount or flow rate of the gaseous portion of the return fuel admitted to the air intake system 12,
   ∘ administer the liquid gas fuel injected by the injectors 20 such that the amount of the flow rate of the gaseous portion of the return fuel admitted to the air intake system is subtracted from the amount of the liquid gas fuel

According to an embodiment of the invention the engine is operated using operational modes comprising: a first operational mode, in which the fuel combusted in the engine by means of a pilot fuel injected by the second injector 24 for ignition purposes and the liquid gas fuel injected by the injectors 20 of the fuel injection system 10 as a main fuel, the first operational mode being practised during the gaseous portion of the return gas is temporarily stored or collected while the use of the gaseous portion for combustion is halted; and a second operation mode in which the fuel combusted in the engine comprises a pilot fuel injected by the second injector 24 for ignition purposes, the liquid gas fuel injected by the injectors 20 of the fuel injection system 10 and the gaseous portion of the return fuel admitted into the air intake system 12.

Advantageously during the first operational mode the amount of liquid gas fuel is 95 - 99,5 % of the total fuel mass combusted and the balance formed of the pilot fuel. In other words the fuel fed to the engine contains for example 99 % of liquid gas fuel and 1 % of light fuel oil pilot fuel.

In the second operational mode the amount of liquid gas fuel is 95 - 99,5 % of the total fuel mass combusted, with subtraction of the amount of the gaseous portion of the return fuel. In other words the fuel fed to the engine contains for example 90 % of liquid gas fuel and 9 % of the gaseous portion of the return fuel and 1 % of light fuel oil pilot fuel. As an example, the created quantity of the gaseous portion of the return fuel may be 4 - 10% of injection quantity of the liquid gas fuel at 100% engine load.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A fuel system (10) for feeding liquid gas fuel to an internal combustion piston engine the system comprising one or more fuel injectors in the internal combustion engine configured to inject liquid gas fuel into the engine, a fuel inlet line (26) extending from a fuel tank (18) via a high pressure pump (28) to the one or more injectors (20), and a fuel return line (30) connected to the one or more injectors (20) of the internal combustion engine for handling a so called return fuel from the one or more injectors, **characterized in that** the fuel return line (30) comprises
- a separation unit configured to separate gaseous and liquid portions of the return fuel,
- a first return line section (30.1) configured to return liquid portion of the return fuel from the separation unit for use in the high pressure pump (28),
- a second return line section (30.2) configured to direct the gaseous portion of the return fuel to an air intake system (12) of the internal combustion engine to be fed to the engine with the charge air.

2. A fuel system according to claim 1, **characterized in that** the first return line section is provided with a liquid fuel pump (40) configured to increase the pressure of the liquid portion of the return fuel prior to feeding the fuel into the fuel tank (18).

3. A fuel system according to claim 1, **characterized in that** the second return line section is provided with a gas compressor (42) configured to increase the pressure of the gaseous portion of the return fuel prior to directing the gaseous portion of the return fuel to the air intake system (12) of the engine.

4. A fuel system according to claim 3, **characterized in that** the second return line section (30.2) is configured to control the admission of the gaseous portion of the return fuel into the air intake system (12) when installed into an engine.

5. A fuel system according to claim 3, **characterized in that** the second return line section (30.2) is provided with an admission control valve (44) configured to feed the gaseous portion of the return fuel to an air receiver of the air intake system (12) when installed into an engine.

6. An internal combustion piston engine comprising a fuel system according to any one of the preceding claims arranged to inject fuel directly to combustion chambers of the engine.

7. Method of operating an internal combustion piston engine comprising a fuel system for feeding liquid gas fuel comprising steps:
- leading pressurized liquid gas fuel from a fuel tank via a fuel inlet line to one or more injectors of the internal combustion piston engine,
- returning part of the pressurized liquid gas fuel from the one or more injectors of the internal combustion piston engine as a return fuel to a separation unit in a fuel return line,
- separating gaseous and liquid portions of the return fuel from each other in the separation unit,
- returning the liquid portion of the return fuel for re-use as said pressurized liquid gas fuel,
- directing the gaseous portion of the return fuel to an air intake system of the internal combustion piston engine and feeding the gaseous portion of the return fuel to the engine with the charge air.

8. Method of operating an internal combustion piston engine according to claim 7, **characterized in that** the gaseous portion of the return fuel is temporarily stored in a gas storage and the pressure of the gas is monitored in the gas storage and when the pressure exceeds a predetermined pressure, gaseous portion of the return fuel is admitted to the air intake channel of the engine and the amount of injection of the liquid gaseous fuel injected to the engine is adjusted based on the admission rate of the gaseous portion of the return fuel.

9. Method of operating an internal combustion piston engine according to claim 7, **characterized in that** flow rate of the return fuel is controlled by controlling the pressure in the return line.

10. Method of operating an internal combustion piston engine according to claim 7, **characterized in that** the amount of evaporated gaseous portion of the return fuel is controlled by controlling the pressure in the return line.

11. Method of operating an internal combustion piston engine according to claim 7, **characterized in that** the engine is operated using operational modes comprising
- a first operational mode, in which the fuel combusted in the engine comprises a pilot fuel and the liquid gas fuel,
- a second operation mode in which the fuel combusted in the engine comprises a pilot fuel, the liquid gas fuel and the gaseous portion of the return fuel.

12. Method of operating an internal combustion piston engine according to claim 11, **characterized in that** in the first operational mode the amount of liquid gas fuel is 95-99,5% of the total fuel mass combusted.

13. Method of operating an internal combustion piston engine according to claim 11, **characterized in that** in the second operational mode the combined amount of liquid gas fuel is 95-99,5% of the total fuel mass combusted, with subtraction of the amount of the gaseous portion of the return fuel.

14. Method of operating an internal combustion piston engine according to claim 7, **characterized in that** the pressure of the liquid portion of the return fuel is increased whereafter the liquid portion of the return fuel is fed to a fuel tank.

15. Method of operating an internal combustion piston engine according to claim 7, **characterized in that** the pressure of the gaseous portion of the return fuel is increased to a pressure higher than the pressure of the charge air in the air intake system (12) prior to returning the gaseous portion of the return fuel into the air intake system.

## Patentansprüche

1. Kraftstoffsystem (10) zum Zuführen von Flüssiggaskraftstoff zu einem Verbrennungsmotor, wobei das System ein oder mehrere Einspritzventile in dem Verbrennungsmotor umfasst, die ausgelegt sind, um Flüssiggaskraftstoff in den Motor einzuspritzen, eine Kraftstoffeinlassleitung (26), die sich von einem Kraftstofftank (18) über eine Hochdruckpumpe (28) zu dem einen oder den mehreren Einspritzventilen (20) erstreckt, und eine Kraftstoffrücklaufleitung (30), die mit dem einen oder den mehreren Einspritzventilen (20) des Verbrennungsmotors zum Transport eines sogenannten Rücklaufkraftstoffs von dem einen oder den mehreren Einspritzventilen verbunden ist, **dadurch gekennzeichnet, dass** die Kraftstoffrücklaufleitung (30) Folgendes umfasst:
- eine Trenneinheit, die ausgelegt ist, um gasförmige und flüssige Teile des Rücklaufkraftstoffs zu trennen,
- einen ersten Rücklaufleitungsabschnitt (30.1), der ausgelegt ist, um einen flüssigen Teil des Rücklaufkraftstoffs aus der Trenneinheit zur Verwendung in der Hochdruckpumpe (28) zurückzuführen,
- einen zweiten Rücklaufleitungsabschnitt (30.2), der ausgelegt ist, um den dem Motor mit Ladeluft zuzuführenden gasförmigen Teil des Rücklaufkraftstoffs zu einem Luftansaugsystem (12) des Verbrennungsmotors zu leiten.

2. Kraftstoffsystem nach Anspruch 1, **dadurch gekennzeichnet, dass** der erste Rücklaufleitungsabschnitt mit einer Flüssigkraftstoffpumpe (40) versehen ist, die ausgelegt ist, um den Druck des flüssigen Teils des Rücklaufkraftstoffs vor dem Zuführen des Kraftstoffs in den Kraftstofftank (18) zu erhöhen.

3. Kraftstoffsystem nach Anspruch 1, **dadurch gekennzeichnet, dass** der zweite Rücklaufleitungsabschnitt mit einem Gaskompressor (42) versehen ist, der ausgelegt ist, um den Druck des gasförmigen Teils des Rücklaufkraftstoffs vor dem Leiten des gasförmigen Teils des Kraftstoffs zu dem Luftansaugsystem (12) des Motors zu erhöhen.

4. Kraftstoffsystem nach Anspruch 3, **dadurch gekennzeichnet, dass** der zweite Rücklaufleitungsabschnitt (30.2) ausgelegt ist, um die Aufnahme des gasförmigen Teils des Rücklaufkraftstoffs in das Luftansaugsystem (12) zu regeln, wenn es in einem Motor montiert ist.

5. Kraftstoffsystem nach Anspruch 3, **dadurch gekennzeichnet, dass** der zweite Rücklaufleitungsabschnitt (30.2) mit einem Aufnahmeregelventil (44) versehen ist, das ausgelegt ist, um den gasförmigen Teil des Rücklaufkraftstoffs einem Luftbehälter des Luftansaugsystems (12) zuzuführen, wenn es in einem Motor montiert ist.

6. Verbrennungsmotor, umfassend ein Kraftstoffsystem nach einem der vorhergehenden Ansprüche, das angeordnet ist, um direkt in die Verbrennungskammern des Motors Kraftstoff einzuspritzen.

7. Verfahren zum Betreiben eines Verbrennungsmotors, umfassend ein Kraftstoffsystem zum Zuführen von flüssigem Gaskraftstoff, das die folgenden Schritte umfasst:
- Führen von unter Druck stehendem Flüssiggaskraftstoff über eine Kraftstoffeinlassleitung zu einem oder mehreren Einspritzventilen des Verbrennungsmotors,
- Rückführen eines Teils des unter Druck stehenden Flüssiggaskraftstoffs als einen Rücklaufkraftstoff von dem einen oder den mehreren Einspritzventilen des Verbrennungsmotors zu einer Trenneinheit in einer Kraftstoffrücklaufleitung,
- Trennen der gasförmigen und flüssigen Teile des Rücklaufkraftstoffs voneinander in der Trenneinheit,
- Rückführen des flüssigen Teils des Rücklaufkraftstoffs zur Wiederverwendung als der unter Druck stehenden Flüssiggaskraftstoff,
- Leiten des gasförmigen Teils des Rücklaufkraftstoffs zu einem Luftansaugsystem des Verbrennungsmotors und Zuführen des gasförmigen Teils des Rücklaufkraftstoffs mit der Ladeluft zu dem Motor.

8. Verfahren zum Betreiben eines Verbrennungsmotors nach Anspruch 7, **dadurch gekennzeichnet, dass** der gasförmige Teil des Rücklaufkraftstoffs zeitweilig in einem Gasspeicher aufbewahrt wird und der Druck des Gases in dem Gasspeicher überwacht wird, und wenn der Druck einen vorbestimmten Druck überschreitet, der gasförmige Teil des Rücklaufkraftstoffs in den Luftansaugkanal des Motors aufgenommen wird und die Einspritzmenge des in den Motor eingespritzten Flüssiggaskraftstoffs auf Basis der Aufnahmerate des gasförmigen Teils des Rücklaufkraftstoffs festgelegt wird.

9. Verfahren zum Betreiben eines Verbrennungsmotors nach Anspruch 7, **dadurch gekennzeichnet, dass** die Flussrate des Rücklaufkraftstoffs durch Regeln des Drucks in der Rücklaufleitung geregelt wird.

10. Verfahren zum Betreiben eines Verbrennungsmotors nach Anspruch 7, **dadurch gekennzeichnet, dass** die Menge des verdampften gasförmigen Teils des Rücklaufkraftstoffs durch Regeln des Drucks in der Rücklaufleitung geregelt wird.

11. Verfahren zum Betreiben eines Verbrennungsmotors nach Anspruch 7, **dadurch gekennzeichnet, dass** der Motor unter Verwendung von Betriebsmodi betrieben wird, die folgende umfassen
- einen ersten Betriebsmodus, bei welchem der im Motor verbrannte Kraftstoff einen Pilotkraftstoff und den Flüssiggaskraftstoff umfasst,
- einen zweiten Betriebsmodus, bei welchem der im Motor verbrannte Kraftstoff einen Pilotkraftstoff, den Flüssiggaskraftstoff und den gasförmigen Teil des Rücklaufkraftstoffs umfasst.

12. Verfahren zum Betreiben eines Verbrennungsmotors nach Anspruch 11, **dadurch gekennzeichnet, dass** im ersten Betriebsmodus die Menge an Flüssiggaskraftstoff 95 - 99,5 % der gesamten verbrannten Kraftstoffmasse beträgt.

13. Verfahren zum Betreiben eines Verbrennungsmotors nach Anspruch 11, **dadurch gekennzeichnet, dass** im zweiten Betriebsmodus die kombinierte Masse des Flüssiggaskraftstoffs 95- 99,5 % der gesamten verbrannten Kraftstoffmasse nach Abzug der Menge des gasförmigen Teils des Rücklaufkraftstoffs beträgt.

14. Verfahren zum Betreiben eines Verbrennungsmotors nach Anspruch 7, **dadurch gekennzeichnet, dass** der Druck des flüssigen Teils des Rücklaufkraftstoffs erhöht wird, wonach der flüssige Teil des Rücklaufkraftstoffs einem Kraftstofftank zugeführt wird.

15. Verfahren zum Betreiben eines Verbrennungsmotors nach Anspruch 7, **dadurch gekennzeichnet, dass** der Druck des gasförmigen Teils des Rücklaufkraftstoffs auf einen Druck erhöht wird, der höher als der Druck der Ladeluft in dem Luftansaugsystem (12) vor Rückführung des gasförmigen Teils des Rücklaufkraftstoffs in das Luftansaugsystem ist.

## Revendications

1. Système de carburant (10) pour l'alimentation d'un moteur à piston à combustion interne en carburant gazeux liquide, le système comprenant un ou plusieurs injecteurs de carburant dans le moteur à combustion interne, lesquels sont configurés pour injecter du carburant gazeux liquide dans le moteur, une conduite d'admission de carburant (26) s'étendant à partir d'un réservoir de carburant (18) jusqu'aux un ou plusieurs injecteurs (20) par le biais d'une pompe haute pression (28), et une conduite de retour de carburant (30) reliée aux un ou plusieurs injecteurs (20) du moteur à combustion interne pour le transfert d'un carburant dit de retour venant des un ou plusieurs injecteurs, **caractérisé en ce que** la conduite de retour de carburant (30) comprend
- une unité de séparation configurée pour séparer des parties gazeuses et liquides du carburant de retour,
- une première section de conduite de retour (30.1) configurée pour renvoyer la partie liquide du carburant de retour venant de l'unité de séparation pour un usage dans la pompe haute pression (28),
- une deuxième section de conduite de retour (30.2) configurée pour guider la partie gazeuse du carburant de retour destinée à être fournie au moteur avec l'air de charge vers un système d'admission d'air (12) du moteur à combustion interne.

2. Système de carburant selon la revendication 1, **caractérisé en ce que** la première section de conduite de retour est dotée d'une pompe à carburant liquide (40) configurée pour augmenter la pression de la partie liquide du carburant de retour avant d'alimenter le carburant vers le réservoir de carburant (18).

3. Système de carburant selon la revendication 1, **caractérisé en ce que** la deuxième section de conduite de retour est dotée d'un compresseur à gaz (42) configuré pour augmenter la pression de la partie gazeuse du carburant de retour avant le guidage de la partie gazeuse du carburant de retour vers le système d'admission d'air (12) du moteur.

4. Système de carburant selon la revendication 3, **caractérisé en ce que** la deuxième section de conduite de retour (30.2) est configurée pour commander l'admission de la partie gazeuse du carburant de retour dans le système d'admission d'air (12) lorsque celui-ci est installé dans un moteur.

5. Système de carburant selon la revendication 3, **caractérisé en ce que** la deuxième section de conduite de retour (30.2) est dotée d'une soupape de commande d'admission (44) configurée pour alimenter la partie gazeuse du carburant de retour vers un récepteur d'air du système d'admission d'air (12) lorsque celui-ci est installé dans un moteur.

6. Moteur à piston à combustion interne comprenant un système de carburant selon l'une quelconque des revendications précédentes, conçu pour injecter du carburant directement dans des chambres de combustion du moteur.

7. Procédé pour le fonctionnement d'un moteur à piston à combustion interne comprenant un système de carburant destiné à alimenter du carburant gazeux liquide, comprenant les étapes suivantes :
- acheminement de carburant gazeux liquide sous pression à partir d'un réservoir de carburant vers un ou plusieurs injecteurs du moteur à piston à combustion interne par le biais d'une conduite d'admission de carburant,
- renvoi d'une partie du carburant gazeux liquide sous pression à partir des un ou plusieurs injecteurs du moteur à piston à combustion interne en tant que carburant de retour vers une unité de séparation dans une conduite de retour de carburant,
- séparation des parties gazeuse et liquide du carburant de retour l'une de l'autre dans l'unité de séparation,
- renvoi de la partie liquide du carburant de retour pour une réutilisation en tant que ledit carburant gazeux liquide sous pression,
- guidage de la partie gazeuse du carburant de retour vers un système d'admission d'air du moteur à piston à combustion interne et alimentation de la partie gazeuse du carburant de retour vers le moteur avec l'air de charge.

8. Procédé pour le fonctionnement d'un moteur à piston à combustion interne selon la revendication 7, **caractérisé en ce que** la partie gazeuse du carburant de retour est stockée temporairement dans un réservoir à gaz et la pression du gaz est surveillée dans le réservoir à gaz et lorsque la pression dépasse une pression prédéterminée, la partie gazeuse du carburant de retour est admise dans le canal d'entrée d'air du moteur et la quantité d'injection du carburant gazeux liquide injecté dans le moteur est ajustée sur la base de la vitesse d'admission de la partie gazeuse du carburant de retour.

9. Procédé pour le fonctionnement d'un moteur à piston à combustion interne selon la revendication 7, **caractérisé en ce que** la vitesse d'écoulement du carburant de retour est commandée en commandant la pression dans la conduite de retour.

10. Procédé pour le fonctionnement d'un moteur à piston à combustion interne selon la revendication 7, **caractérisé en ce que** la quantité de partie gazeuse évaporée du carburant de retour est commandée en commandant la pression dans la conduite de retour.

11. Procédé pour le fonctionnement d'un moteur à piston à combustion interne selon la revendication 7, **caractérisé en ce que** le moteur fonctionne à l'aide de modes de fonctionnement, comprenant :
- un premier mode de fonctionnement, dans lequel le carburant brûlé dans le moteur comprend un carburant pilote et le carburant gazeux liquide,
- un deuxième mode de fonctionnement dans lequel le carburant brûlé dans le moteur comprend un carburant pilote, le carburant gazeux liquide et la partie gazeuse du carburant de retour.

12. Procédé pour le fonctionnement d'un moteur à piston à combustion interne selon la revendication 11, **caractérisé en ce que** dans le premier mode de fonctionnement, la quantité de carburant gazeux liquide est de 95 - 99,5% de la masse totale de carburant brûlé.

13. Procédé pour le fonctionnement d'un moteur à piston à combustion interne selon la revendication 11, **caractérisé en ce que** dans le deuxième mode de fonctionnement, la quantité combinée de carburant gazeux liquide est de 95 - 99,5% de la masse totale de carburant brûlé, en déduisant la quantité de la partie gazeuse du carburant de retour.

14. Procédé pour le fonctionnement d'un moteur à piston à combustion interne selon la revendication 7, **caractérisé en ce que** la pression de la partie liquide du carburant de retour est augmentée, après quoi la partie liquide du carburant de retour est alimentée vers un réservoir de carburant.

15. Procédé pour le fonctionnement d'un moteur à piston à combustion interne selon la revendication 7, **caractérisé en ce que** la pression de la partie gazeuse du carburant de retour est augmentée à une pression supérieure à la pression de l'air de charge dans le système d'admission d'air (12) avant le renvoi de la partie gazeuse du carburant de retour vers le système d'admission d'air.
